# EUROPEAN PATENT SPECIFICATION

(11) **EP 1 431 134 B1**
(45) Date of publication and mention of the grant of the patent: **26.04.2006**
(21) Application number: 03028503.5
(22) Date of filing: 10.12.2003
(51) Int. Cl.: B60R 21/20

(54) **Door of Airbag apparatus for vehicle**
Tür einer Airbageinrichtung für Fahrzeug
Porte d'airbag pour véhicule

(30) Priority: 10.12.2002 JP 2002357668; 10.12.2002 JP 2002357669
(43) Date of publication of application: 23.06.2004
(73) Proprietor: Calsonic Kansei Corporation, Tokyo (JP)
(72) Inventor: Ono, Kazumi, Nakano-ku Tokyo (JP); Kawashima, Tsutomu, Nakano-ku Tokyo (JP); Nagata, Nobuhiro, Nakano-ku Tokyo (JP); Yamagishi, Hiroaki, Nakano-ku Tokyo (JP)
(74) Representative: Grünecker, Kinkeldey, Stockmair & Schwanhäusser Anwaltssozietät

(56) References cited:
- EP-A- 0 826 564
- EP-A- 1 251 039
- US-A- 5 350 191
- US-A- 5 375 875
- US-A- 5 564 733
- US-A1- 2002 005 630
- US-B1- 6 299 198
- US-B1- 6 402 189

## Description

### BACKGROUND OF THE INVENTION

### Field of the Invention

The present invention relates to an airbag apparatus for a vehicle.

### Description of the Prior Art

A vehicle such as an automobile is provided with an airbag apparatus as safety means in an emergency.

In this airbag apparatus, when a predetermined or higher load acts on a vehicle body, the airbag body which is accommodated with a folded state in a housing disposed inside the instrument panel is inflated toward an occupant compartment inner side by the pressured gas from an inflator, and receives an occupant seated at a predetermined position, and then protects the occupant from collision with the instrument panel.

The airbag body is adopted to push an airbag lid which is provided on a fixing portion by a fragile line formed on an instrument panel and the like, and to open the airbag lid by breaking the fragile line, to form an inflation opening, and to be inflated toward an occupant compartment inner side from the inflation opening. It is preferable for the fixing portion to be fixed without being moved when the airbag is inflated, but the fixing portion includes small deformation when the airbag is expanded because the inflation pressure at the time of expanding the airbag is very large.

Such an airbag lid is provided with a door for holding disposed in the back surface of the airbag lid in order to help the opening of the airbag lid.

The holding door is attached to the instrument panel in the vicinity of the airbag lid. The installation of the holding door to the airbag lid is performed such that a boss projected from the back surface of the airbag lid is passed through a hole formed on the holding door, and is fixed by thermal caulking.

The holding door is provided with a longitudinal bead (For example, reference to Japanese Patent Laid-Open 2002-220018).

However, the airbag apparatus for a vehicle described in the Japanese Patent Laid-Open 2002-220018 had a possibility that the portion between the holding door and the airbag lid is destroyed in the vicinity of a hinge portion when the airbag is expanded.

Furthermore, in case of providing the holding door on the back surface of the airbag lid, if the edge portion of the holding door is located in the vicinity of the fragile line, the fragile line is broken by the shearing force when the airbag body is expanded. If the fragile line is broken by the shearing force, the fragile line may not be clearly broken along the line, and there is a possibility that a fragment is generated in the portion where the fragile line is broken aside from the line. It has been known that such a fragment tends to be generated in the corner portion of the airbag lid.

Consequently, there has been proposed an airbag apparatus which includes a generally mountain shaped cut off on the holding door so as to bend the corner portion of the holding door first when the airbag body is expanded, so that the shearing force acted on the corner portion of the fragile line is weakened, and the fragile line can be clearly broken (for example, reference to Japanese Patent Laid-Open 2001-315605). In this patent application, the airbag lid is adopted to open as an H shape by a fragile line of H shape. The corner portion of the holding door is directly connected to the airbag lid.

However, the airbag apparatus described in the Japanese Patent Laid-Open 2001-315605 is for opening the airbag lid as the H shape by the fragile line of the H shape, so if the airbag apparatus is applied to an airbag lid wbicb is opened as a U shape or a square shape by the fragile line of the U shape or the square shape, the airbag apparatus may not be operated well.

In other words, if the airbag apparatus is opened as the H shape, since two airbag lids are opened as a gatefold, the two lids are easy to be opened. Therefore the fragile line can be destroyed by effectively weakening the shearing force acted on the corner of the fragile line with the state that the corner portion of the holding door is bent. However, when an airbag lid is opened as a U shape or a square shape, the other portion of the airbag lid is the fixing portion of an instrument panel, so the lid is difficult to be opened than the H shaped airbag lid, and it is thought that the state of bending a corner portion of a holding door is not enough for breaking the U shaped fragile line and the square shape fragile line by effectively weakening the shearing force acted on the corner portion of the fragile line.

In the Japanese Patent Laid-Open 2001-315605, a corner portion of a holding door is directly connected to an airbag lid, but this structure disturbs the function for weakening a shearing force. Therefore, the airbag apparatus was hard to be used for the airbag lid of the U shape or the square shape, which includes the fixing portion of an instrument panel as the other portion.

US 2002/005630 A1, according to the pre-characterizing part of claim 1, discloses an airbag apparatus, including an airbag lid provided by a fragile line on a resin instrument panel; and a holding door disposed in a back surface of said airbag lid. Said holding door is fixed to the lid by bosses projecting from the lid, engaging into holes of the holding door. The holding door includes a door body portion, an installation portion being mounted to the instrument panel and a hinge portion disposed between the door body portion and the installation portion. The door body portion includes I-, L- or T-shaped reinforcing recessed portions.

US 6 299 198 (B1) discloses a holding door for holding an airbag lid which is part of an instrument panel cover. Said holding door includes a door body portion, an installation portion being mounted to an instrument panel core and a hinge portion disposed between the door body portion and the installation portion. The door body portion includes a plurality of longitudinally extending, reinforcing recesses.

EP 0 826 564 A discloses a holding door having an installation portion, a door body portion and a hinge portion disposed therebetween. The door body portion has protrusions provided in a lattice form.

EP 1 251 039 A1 discloses two airbag doors, each of same having longitudinally extending depressions for reinforcement purposes.

### SUMMARY OF THE INVENTION

It is an object of the present invention to solve the above described problems and to provide an airbag apparatus for a vehicle which can prevent the damage between a holding door and an airbag lid when the airbag is expanded.

In order to achieve the above described objects, according to the present invention, an airbag apparatus for a vehicle comprises an airbag lid provided by a fragile line on a resin instrument panel and a door for holding disposed in the back surface of the airbag lid by fixing a boss projected from the back surface of the airbag lid. The holding door includes a door body portion positioned in the back surface of the airbag lid, an installation portion to the instrument panel disposed around the airbag lid, and a hinge portion disposed between the door body portion and the installation portion. The door body portion of the holding door includes a longitudinal bead extending from the hinge portion side to the leading end side of the door body portion and a lateral bead which is positioned between the hinge portion and an installation portion to the boss disposed in the vicinity of the hinge portion and is extended along the hinge portion, and the longitudinal bead and the lateral bead are crossed.

According to the above described airbag apparatus for the vehicle, the strength of the longitudinal direction of the door body portion can be improved by the longitudinal bead. The strength of the lateral direction of the door body portion can be improved by the lateral bead. The strengths of the longitudinal direction and the lateral direction of the door body portion are further enhanced by crossing the longitudinal bead and the lateral bead. Consequently, the damage between the holding door and the airbag lid when the airbag is expanded can be prevented. The strength in the vicinity of the hinge portion of the door body portion can be improved especially by crossing the longitudinal bead and the lateral bead in the vicinity of the hinge portion. Therefore, the damage in the vicinity of the hinge portion at the time of expanding the airbag can be prevented.

In an example, the airbag apparatus includes a plurality of longitudinal beads. The strength of the longitudinal direction of the door body portion is further enhanced by providing the plurality of longitudinal beads.

In the other example, the other lateral bead which is a parallel to the lateral bead is provided so as to construct a lattice form by the longitudinal beads and the lateral beads, and an installation portion to a boss is formed inside the lattice form portion. The strength of the door body portion is further enhanced by construing the longitudinal beads and the lateral beads to be the lattice form. By forming the installation portion to the boss inside the lattice form portion, an installation point is definitely provided in the portion where the strength is improved.

In an example, the holding door is a metal door, and by adopting the metal door as the holding door, the bead and boss hole are punched and formed all at once by press molding.

According to a further example the spaces between the both sides of the airbag lid and the both sides of the door body portion are formed by adopting a smaller width dimension of the door body portion of the holding door than the width dimension of the airbag lid, and the spaces in the width direction between the both sides of the airbag lid and the both sides of the door body portion are constructed to be larger gradually toward the leading end portion side by cutting crosswise the corner portions of the door body portion.

According to the above described airbag for the vehicle, the width dimension of the door body portion of the holding door is adopted to be smaller than the width dimension of the airbag lid, and the spaces between the both sides of the airbag lid and the both sides of the door body portion are formed. Therefore, when the airbag body is expanded, the fragile line can be broken by a tension force. The corner portions of the door body portion are cut crosswise, and the spaces in the width direction between the both sides of the airbag lid and the both sides of the door body portion are constructed to be larger gradually toward the leading end side, so that the tension force acted on the corner portion of the airbag lid is set to be larger. As described above, the airbag apparatus for the vehicle can break the fragile line by effectively using the tension force even when the U shaped airbag lid or the square shaped airbag lid which includes the fixing portion of the instrument panel as the other portion.

### BRIEF DESCRIPTION OF THE DRAWINBGS

FIG. 1 is a lateral cross-section view of an airbag apparatus according to a first embodiment of the present invention.
FIG. 2 is a plane view of a holding door in FIG. 1.
FIG. 3 is a perspective view of the holding door in FIG. 1.
FIGs. 4A, 4B, and 4C are actuation views at the time of expanding an airbag when a longitudinal bead is provided.
FIGs. 5A, 5B, and 5C are actuation views at the time of expanding an airbag when a longitudinal bead is not provided.
FIGs. 6A, 6B, and 6C are actuation views at the time of expanding an airbag when a lateral bead is provided.
FIGs. 7A, 7B, and 7C are actuation views at the time of expanding an airbag when a lateral bead is not provided.
FIG. 8 is a plane view of a holding door of an airbag apparatus according to a second embodiment of the present invention.
FIG. 9 is a cross section view of A-A portion in FIG. 8 showing the state that a holding door destroys a fragile line by a tension force.
FIG. 10 is a cross section view of B-B portion in FIG. 8 showing the state that a holding door destroys a fragile line by a shearing force.

### DETAILED DESCRIPTION OF THE PREFERRED EMBODIMENTS

Several embodiments of the present invention will be described below with reference to the accompanying views.

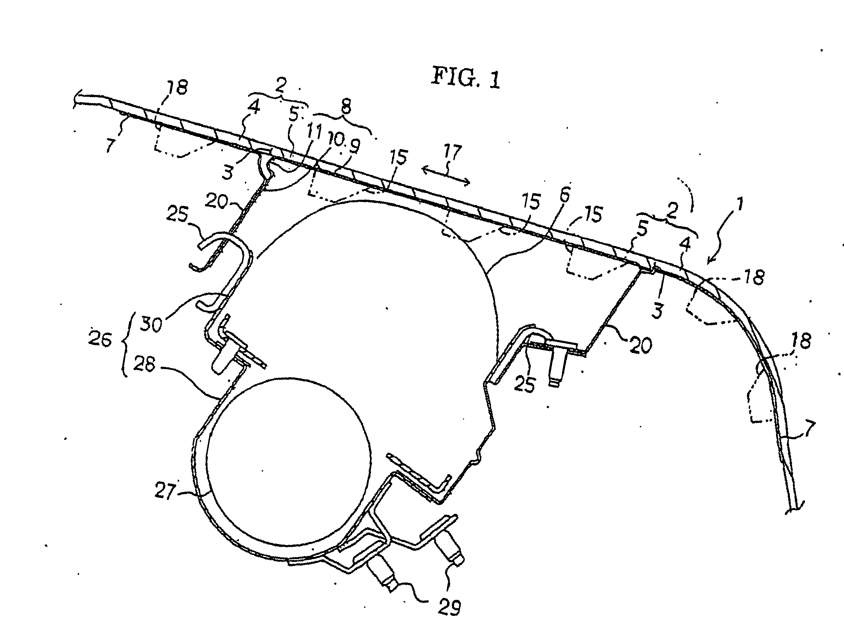

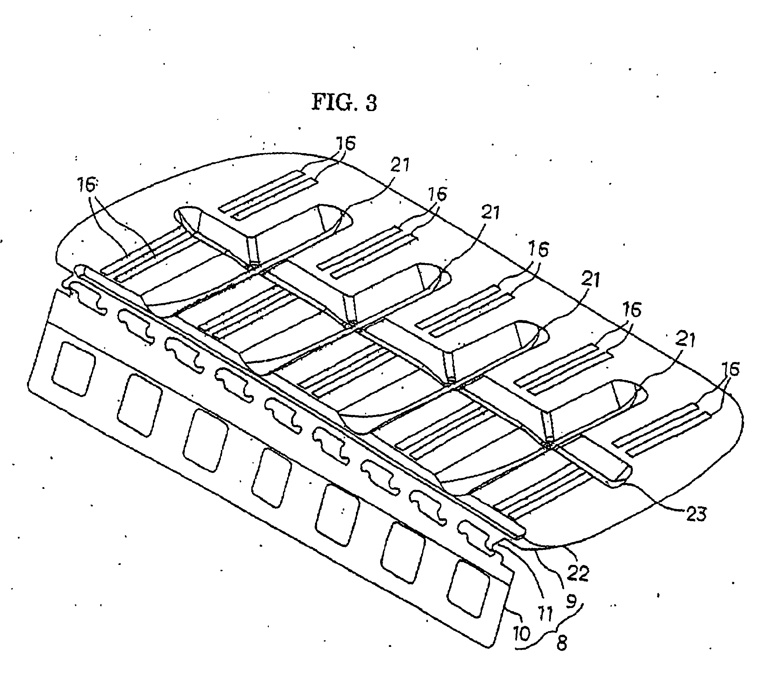

FIGs. 1 to 7C show an airbag apparatus according to the first embodiment of the present invention which is provided in a vehicle such as an automobile as safety means in an emergency.

The airbag apparatus 1 is provided in an occupant seat side of the portion of an instrument panel 2 which is positioned below a windshield of an automobile.

The above described instrument panel 2 is made of resin, and also it is a hard panel formed by a core in which the resin layer is attached. The instrument panel 2 generally has a size extending from a driver seat to an occupant seat, but there is an instrument panel portion 2 disposed only in an occupant seat.

The instrument panel 2 includes the instrument panel portion 2 in below.

A square shaped fragile line 3 is formed to the resin instrument panel 2, and a fixing portion 4 and an airbag lid 5 are separated by the fragile line 3. The airbag lid 5 is opened to the fixing portion 4 by breaking the square shaped fragile line 3 when an airbag body 6 is expanded, and forms an inflation opening of the airbag body 6.

The fragile line 3 is formed on the back surface of the instrument panel 2, and it is constructed that the airbag lid 5 can not be seen from the surface side of the instrument panel 2.

A reinforcement member 7 is disposed in the peripheral border of the inflation opening in which the airbag lid 5 in the instrument panel 2 is opened. If the fragile line 3 is formed as a square shape, the airbag lid 5 can be opened without using a hinge.

A door for holding 8 is disposed in the back surface of the airbag lid 5. The holding door 8 includes a door body portion 9 which is positioned in the back surface of the airbag lid 5, an installation portion 10 which is disposed in the reinforcement member 7 provided in the vicinity of the airbag lid 5, and a hinge portion 11 which is provided between the door body portion 9 and the installation portion 10. The holding door 8 is constructed separately from the reinforcement member 7. The door body portion 9 may be supported by a reinforcement member 7 with superimposing at least part of the peripheral border of the door body portion 9 onto the reinforcement member 7, so that the deformation of the airbag lid 5 may be prevented.

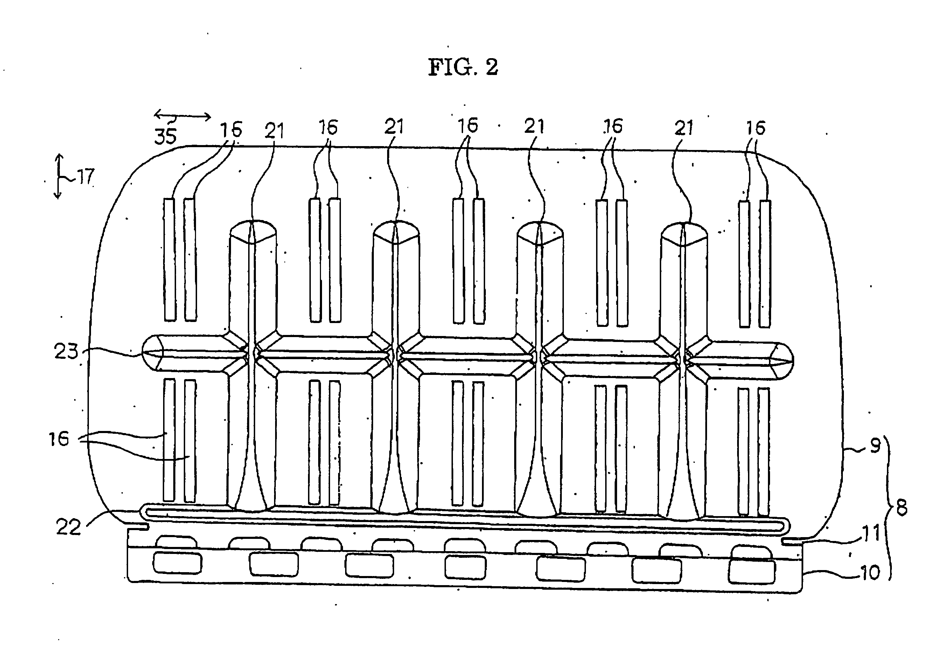

A plurality of pairs of bosses 15 is projected from the back surface of the airbag lid 5. The door body portion 9 is formed with a plurality of pairs of holes 16 (refer to FIG. 2) which passed through the bosses 15. The holding door 8 is disposed in the back surface of the airbag lid 5 by fixing the bosses 15 with thermal caulking after passing through the holes 16. The boss 15 includes a longitudinal rib like shape extending only a required length toward the frontward and backward direction of a vehicle 17. The hole 16 includes a slit extending only a required length toward the frontward and backward direction of the vehicle 17. A plurality of pairs of bosses 18 is also projected from the back surface of the fixing portion 4. The reinforcement member 7 is formed with a plurality of pairs of holes (not shown) which passed through the boss 18. The reinforcement member 7 is disposed in the back surface of the fixing portion 4 by fixing the boss 18 with the thermal caulking after passing through the hole.

A leg portion 20 of frame shape is formed in around the fragile line 3 of the reinforcement member 7. The installation portion 10 of the holding door 8 is fixed to the leg portion 20 by spot welding. The installation portion 10 is disposed in the front portion of the front or back direction of the vehicle 17 of the leg portion 20.

The airbag apparatus 1 comprises an airbag module 26 including a hook for disposing a lid 25 which is capable of inserting and engaging to a hole for engaging a hook formed on the leg portion 20 of the reinforcement member 7. The airbag module 26 is arranged in the leg portion 20 of the reinforcement member 7 through the hook 25, so that the reaction force when the airbag body 6 is expanded does not directly act on the instrument panel 2.

The airbag module 26 comprises an inflator containing portion 28 capable of containing a cylindrical inflator 27 which ejects pressured gas. This inflator containing portion 28 is fastened and fixed to a vehicle side member such as a steering support member (not shown) by using a fastening member 29 such as a bolt.

The airbag module 26 comprises an airbag body containing portion 30 for containing the folded state airbag body 6 which is inflated and expanded by the pressured gas ejected from the inflator 27.

In the first embodiment of the present invention, a longitudinal bead 21 extending from the hinge portion 11 side to the leading end side of the door body portion 9 is provided in the door body portion 9 of the holding door 8. A lateral bead 22 positioned between the hinge portion 11 and the installation portion (hole16) to the boss 15 disposed in the vicinity of the hinge portion 11, and extending along the hinge portion 11 is also provided in the door body portion 9. The longitudinal bead 21 and the lateral bead 22 are constructed to be crossed in the vicinity of the hinge portion 11.

Moreover, in one embodiment, a plurality of longitudinal beads 21 is provided.

Furthermore, another lateral bead 23 which is a parallel to the lateral bead 22 is provided, so that the longitudinal bead 21, lateral beads 22 and 23 are constructed to be almost in a lattice form, and the installation portion (hole 16) to the boss 15 is formed inside the lattice form.

A resin door can be used for the holding door 8, but it is preferable for the holding door 8 to use a metal door. Reference numeral 35 denotes the direction of vehicle width.

Next, the function of the above described first embodiment of the present invention will be described.

When the inflator 27 is activated, the pressured gas from the inflator 27 is ejected, and is injected into the airbag body 6.

The airbag body 6 is inflated with the injection of the gas, and the square shaped fragile line 3 is broken by the pressure of the inflation, and then the airbag lid 5 is opened to the fixing portion 4 and the inflation opening is formed, and at the same time, the airbag body 6 is inflated toward the oblique backward of a vehicle (an occupant compartment inner side) from the inflation opening. Therefore, the airbag body 6 receives a head and the like of an occupant in an occupant seat side seated in a predetermined position, and protects the head and the like from contacting to the instrument panel 2.

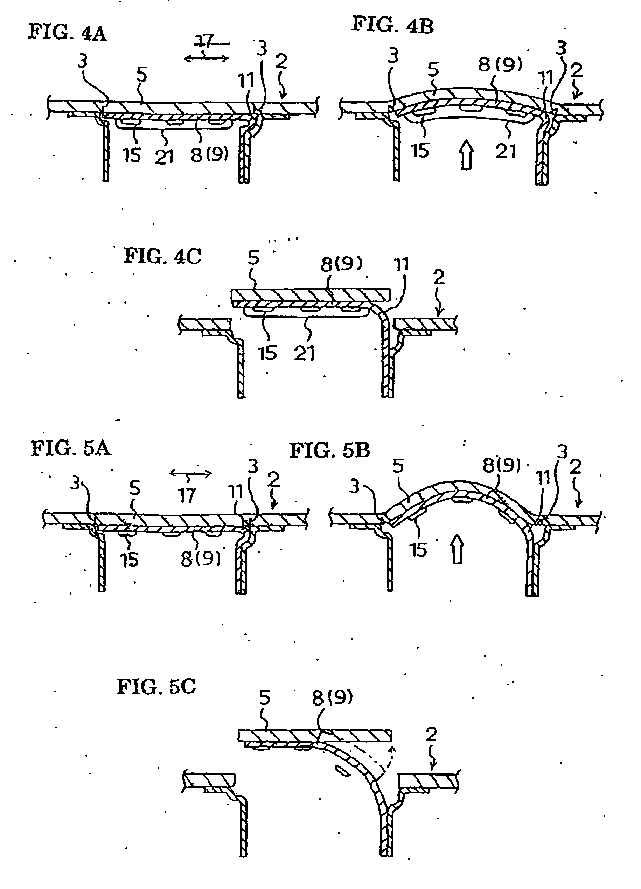

According to the first embodiment of the present invention, the strength of the longitudinal direction (frontward and backward direction of vehicle 17) of the door body portion 9 can be improved by the longitudinal bead 21. If the strength of the longitudinal direction of the door body portion 9 is improved, as shown in FIGs. 4A to 4C, when the airbag body 6 is expanded, the curvature deformation in the longitudinal direction of the airbag lid 5 and the door body portion 9 is suppressed to small deformation, so the airbag lid 5 can be opened with leaving flexibility in the hinge portion 11. On the other hand, if the longitudinal bead 21 is not disposed, as shown in FIGs. 5A to 5C, the curvature deformation in the longitudinal direction of the airbag lid 5 and door body portion 9 becomes large when the airbag body 6 is expanded, so the hinge portion 11 is extended for full-length, and the portion between the airbag lid 5 and the door body portion 9 may be destroyed (reference to FIG. 5C).

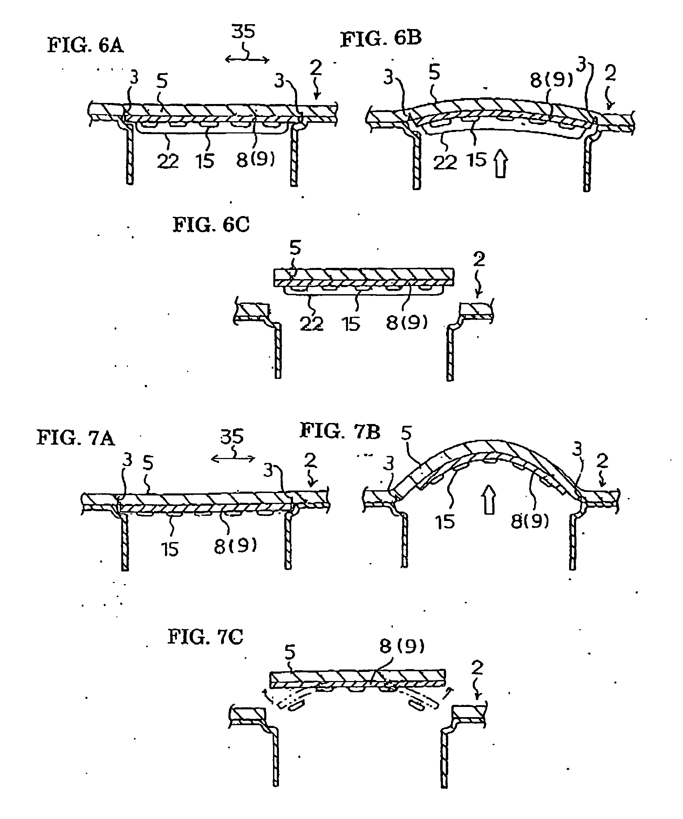

The strength of lateral direction (the direction of vehicle width 35) can be improved by the lateral bead 22. If the strength of the lateral direction of the door body portion 9 is improved, as shown in FIGs. 6A to 6C, when the airbag body 6 is expanded, the airbag lid 5 can be opened with the state that the curvature deformation in the lateral direction of the airbag lid 5 and the door body portion 9 is suppressed to small deformation.

On the contrary, if the lateral bead 22 is not provided, as shown in FIGs. 7A to 7C, the airbag lid 5 is opened with the state that the curvature deformation in the lateral direction of the airbag lid 5 and the door body portion 9 is large, and the portion between the airbag lid 5 and the door body portion 9 may be destroyed (reference to FIG. 7C).

Moreover, the strengths of the longitudinal direction and the lateral direction of the door body portion 9 can be further enhanced by crossing the longitudinal bead 21 and the lateral bead 22. Therefore, the damage between the holding door 8 and the airbag lid 5 at the time of expanding the airbag body 6 can be prevented (reference to FIGs. 4C and 6C).

The strength in the vicinity of the hinge portion 11 of the door body portion 9 can be selectively improved especially by crossing the lateral bead 21 and the longitudinal bead 23 in the vicinity of the hinge portion 11. Therefore, the damage in the vicinity of the hinge portion 11 at the time of expanding the airbag body 6 can be prevented (reference to FIG. 4C).

The strength of the longitudinal direction of the door body portion 9 can be further enhanced by providing a plurality of longitudinal beads 21.

Furthermore, the strength of the door body portion 9 can be further enhanced by constricting the longitudinal beads 21 and the lateral beads 23 and 23 to be the lattice form. An installation point is definitely disposed in the portion, where the strength is enhanced, by forming the installation portion (hole 16) to the boss 15 inside the lattice form.

The metal door is adopted as the holding door 8, so that the hole 16 for the bead and the boss 15 is punched and formed all at once by press molding.

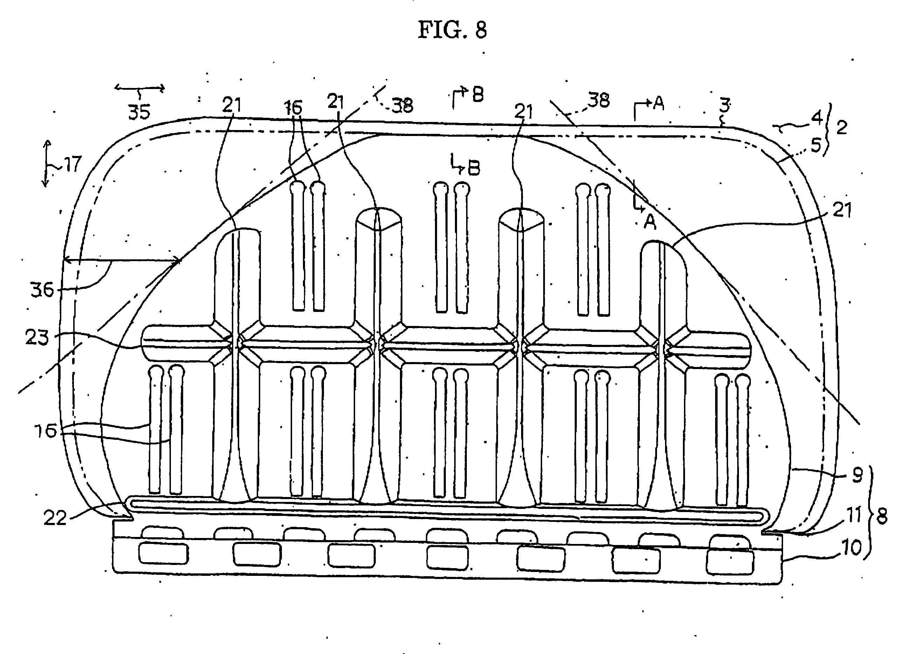

FIGs. 8 to 10 are for showing the second embodiment of the present invention. The basic structure of the airbag apparatus 1 is same as the first embodiment, so the explanation of the first embodiment is given to the second embodiment. In the first embodiment, the fragile line 3 is adopted as the square shape, but the fragile line 3 can be a U shape or a square shape. When the fragile line 3 is adopted as the U shape, the airbag lid 5 is opened by including a hinge in the disconnecting portion of the U shaped fragile line 3. On the other hand, if the fragile line 3 is adopted as the square shape, the airbag lid 5 can be opened without including a hinge.

In the second embodiment, as shown in FIG. 8, adopting the direction of vehicle width as a standard, the width dimension of the door body portion 9 of the holding door 8 is adopted to be smaller than the width dimension of the airbag lid 5, so spaces 36 are formed between the both sides of the airbag lid 5 and the both sides of the door body portion 9.

Moreover, the corner portions of the door body portion 9 are cut substantially crosswise (cut line 38), so the spaces 36 in the width direction between the both sides of the airbag lid 5 and the both sides of the door body portion 9 are constructed to be larger toward the leading end side.

Next, the function of the second embodiment will be described.

The basic actuation of the airbag apparatus 1 is same as the first embodiment, so the explanation of the first embodiment is given to the second embodiment.

According to the second embodiment of the present invention, the width dimension of the door body portion 9 of the holding door 8 is adopted to be smaller than the width dimension of the airbag lid 5, and the spaces 36 are formed between the both sides of the airbag lid 5 and the both sides of the door body portion 9, so the fragile line 3 can be broken by the tension force when the airbag body 6 is expanded.

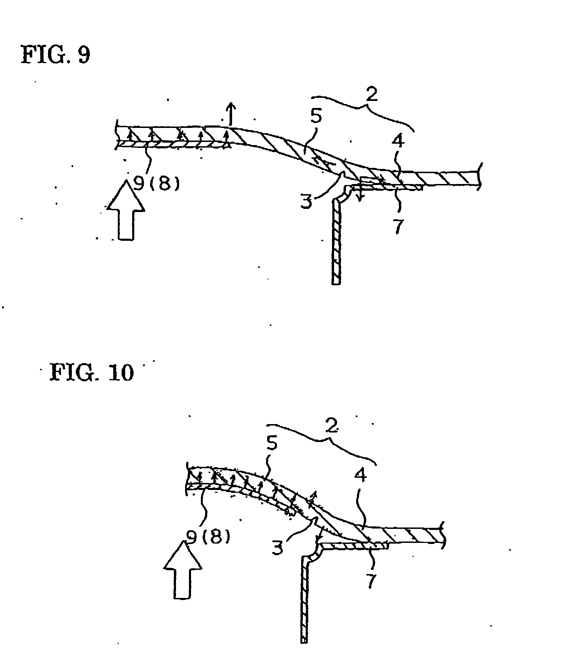

In other words, as shown in FIG. 9, the edge portion of the door body portion 9 of the holding door 8 presses the position where is apart from the fragile line 3, so the tension force acts on the fragile line 3, and then the fragile line 3 is broken by the tension force. On the other hand, as shown in FIG. 10, if the edge portion of the door body portion 9 of the holding door 8 presses the position where is close to the fragile line 3, the shearing force acts on the fragile line 3, and the fragile line 3 is broken by the shearing force.

The central portion of the direction of vehicle width 35 in the leading end of the door body portion 9 of the holding door 8 is broken by the above mentioned shearing force, but it is constructed intentionally so as to set a splitting origin, so actually, this construction does not affect the break of the fragile line 3.

Moreover, especially, the corner portions of the door body portion 9 of the holding door 8 are cut crosswise, the spaces in the direction of width between the both sides of airbag lid 5 and the both sides of the door body portion 9 are constructed to be a larger gradually toward the leading end, so the tension force acted on the corner of the airbag lid 5 is adopted to be larger.

As described above, if the U shaped airbag lid 5 or the square shaped airbag lid 5 which includes the fixing portion 4 of the instrument panel 2 as the other portion, the fragile line 3 can be clearly broken by effectively using the tension force.

## Claims

1. An airbag apparatus for a vehicle comprising:
an airbag lid (5) provided by a fragile line (3) on an instrument panel (2); and
a door for holding (8) disposed in a back surface of said airbag lid (5) by fixing a boss (15) projected from the back surface of the airbag lid (5),
said holding door (8) including:
a door body portion (9) positioned in the back surface of the airbag lid (5);
an first installation portion (10) to the instrument panel (2) disposed around said airbag lid (5); and
a hinge portion (11) disposed between the door body portion (9) and the first installation portion (10), wherein
the door body portion (9) of said holding door (8) includes a longitudinal bead (21)
extending from the hinge portion (11) side to the leading end side of the door body portion (9) and a first lateral bead (22) which is positioned between said hinge portion (11) and a second installation portion (16) to said boss (15) disposed in the vicinity of the hinge portion (11) and is extended along said hinge portion (11),
**characterized in that**
said first lateral bead (22) and said longitudinal bead (21) are crossed, to prevent damage between said airbag lid (5) and said holding door (8) when an airbag (6) of said airbag apparatus is expanded.

2. The airbag apparatus according to claim 1, **characterized in that** a plurality of said longitudinal beads (21) is provided on said door body portion (9) of said holding door (8).

3. The airbag apparatus according to claim 1 or 2, **characterized by** a second lateral bead (23) which is a parallel to said first lateral bead (22), wherein the first and second lateral beads (22, 23) and the longitudinal beads (21) are constructed to be substantially a lattice form, and the second installation portion (16) to said boss (15) is formed inside the lattice form.

4. The airbag apparatus according to one of claims 1 to 3, **characterized in that** said holding door (8) includes a metal door.

5. The airbag apparatus according to one of claims 1 to 4, **characterized in that** the second installation portion (16) includes a pair of holes engaged by a pair of fixing bosses (15).

6. The airbag apparatus according to one of claims 1 to 5, **characterized in that** spaces (36) between the both sides of the airbag lid (5) and the both sides of the door body portion (9) are formed by adapting a width dimension of the door body portion (9) of the holding door (8) to be smaller than a width dimension of the air bag lid (5), and the spaces (36) in the width direction between the both sides of the airbag lid (5) and the both sides of the door body portion (9) are constructed to be larger gradually toward the leading end side by cutting crosswise the corner portions of said door body portion (9).

## Patentansprüche

1. Luftsackvorrichtung für ein Fahrzeug, die aufweist:
einen Luftsackdeckel (5), vorgesehen durch eine zerbrechliche Linie (3) auf einem Armaturenbrett (2); und eine Klappe (8) zum Halten, angeordnet in einer Rückseite des Luftsackdeckels (5) durch Befestigen einer Nabe (15), die von der Rückseite des Luftsackdeckels (5) vorspringt,
wobei die Halteklappe (8) enthält:
einen Klappenkörperabschnitt (9), positioniert in der Rückseite des Luftsackdeckels (5);
einen ersten Installationsabschnitt (10) in dem Armaturenbrett (2), angeordnet rund um den Luftsackdeckel (5); und
einen Gelenkabschnitt (11), angeordnet zwischen dem Klappenkörperabschnitt (9) und dem ersten Installationsabschnitt (10), wobei
der Klappenkörperabschnitt (9) der Halteklappe (8) eine Längswulst (21) enthält, die sich von der Seite des Gelenkabschnitts (11) zu der vorauslaufenden Endseite des Klappenkörperabschnittes (9) erstreckt und eine erste seitliche Wulst (22), die sich zwischen dem Gelenkabschnitt (11) und einem zweiten Installationsabschnitt (16) zu dem Nabenabschnitt (15), angeordnet in der Nähe des Gelenkabschnittes (11), angeordnet ist und entlang des Gelenkabschnittes (11) verlängert ist,
**dadurch gekennzeichnet, dass**
die erste seitliche Wulst (22) und die Längswulst (21) gekreuzt sind, um eine Beschädigung zwischen dem Luftsackdeckel (5) und der Halteklappe (8) zu verhindern, wenn ein Luftsack (6) der Luftsackvorrichtung ausgedehnt wird.

2. Luftsackvorrichtung nach Anspruch 1, **dadurch gekennzeichnet, dass** eine Mehrzahl von den Längswülsten (21) an dem Klappenkörperabschnitt (9) der Halteklappe (8) vorgesehen ist.

3. Luftsackvorrichtung nach Anspruch 1 oder 2, **gekennzeichnet durch** eine zweite seitliche Wulst (23), die zu der ersten seitlichen Wulst (22) parallel ist, wobei die erste und die zweite seitliche Wulst (22, 23) und die Längswülste (21) aufgebaut sind, um im Wesentlichen in einer Gitterform zu sein, und der zweite Installationsabschnitt (15) in der Nabe (15) innerhalb der Gitterform gebildet ist.

4. Luftsackvorrichtung nach einem der Ansprüche 1 bis 3, **dadurch gekennzeichnet, dass** die Halteklappe (8) eine Metallklappe enthält.

5. Luftsackvorrichtung nach einem der Ansprüche 1 bis 4, **dadurch gekennzeichnet, dass** der zweite Installationsabschnitt (16) ein Paar von Bohrungen enthält, mit denen ein Paar von Befestigungsnaben (15) im Eingriff ist.

6. Luftsackvorrichtung nach einem der Ansprüche 1 bis 5, **dadurch gekennzeichnet, dass** Räume (36) zwischen den beiden Seiten des Luftsackdeckels (5) und den beiden Seiten des Klappenkörperabschnittes (9) durch Bemessen einer Breitenabmessung des Klappenkörperabschnittes (9) der Halteklappe (8) als kleiner als eine Breitenabmessung des Luftsackdeckels (5) gebildet wird, und die Räume (36) in der Richtung der Breite zwischen beiden Seiten des Luftsackdeckels (5) und den beiden Seiten des Klappenkörperabschnittes (9) gebildet sind, allmählich in der Richtung zu der vorauslaufenden Endseite durch kreuzweises Schneiden der Eckabschnitte des Klappenkörperabschnittes (9) größer zu sein.

## Revendications

1. Dispositif formant coussin de sécurité gonflable pour un véhicule comprenant :
un couvercle de coussin de sécurité gonflable (5) obtenu par une ligne fragile (3) sur un tableau de bord (2) ; et une porte de retenue (8) disposée dans une surface arrière dudit couvercle de coussin de sécurité gonflable (5) en fixant un bossage (15) saillant depuis la surface arrière du couvercle de coussin de sécurité gonflable (5),
ladite porte de retenue (8) comprenant :
une partie de corps de porte (9) positionnée sur la surface arrière du couvercle de coussin de sécurité gonflable (5) ;
une première partie d'installation (10) au tableau de bord (2) disposée autour dudit couvercle de coussin de sécurité gonflable (5) ; et
une partie d'articulation (11) disposée entre la partie du corps de porte (9) et la première partie d'installation (10) dans laquelle
la partie de corps de porte (9) de ladite porte de retenue (8) comprend un rebord longitudinal (21) s'étendant depuis le côté sur lequel se trouve la partie d'articulation (11) latérale jusqu'à la partie où se trouve l'extrémité avant de la partie de corps de porte (9) et un premier rebord latéral (22) qui est positionné entre ladite partie d'articulation (11) et une seconde partie d'installation (16) audit bossage (15) disposée à proximité de la partie d'articulation (11) et s'étend le long de ladite partie d'articulation (11) ,
**caractérisé en ce que**
ledit premier rebord latéral (22) et ledit rebord longitudinal (21) sont croisés, pour éviter tout dommage entre ledit couvercle de coussin de sécurité gonflable (5) et ladite porte de retenue (8) quand un coussin de sécurité gonflable (6) dudit dispositif formant coussin de sécurité gonflable se dilate.

2. Dispositif formant coussin de sécurité gonflable selon la revendication 1, **caractérisé en ce qu'**une pluralité desdits rebords longitudinaux (21) est ménagée sur ladite partie de corps de porte (9) de ladite porte de retenue (8).

3. Dispositif formant coussin de sécurité gonflable selon la revendication 1 ou 2, **caractérisé par** un second rebord latéral (23) qui est parallèle audit premier rebord latéral (22), dans lequel le premier et le second rebords latéraux (22, 23) et les rebords longitudinaux (21) sont réalisés pour être sensiblement en forme de treillis et la seconde partie d'installation (16) audit bossage (15) est formée à l'intérieur de la forme de treillis.

4. Dispositif formant coussin de sécurité gonflable selon l'une des revendications 1 à 3, **caractérisé en ce que** ladite porte de retenue (8) comprend une porte métallique.

5. Dispositif formant coussin de sécurité gonflable selon l'une des revendications 1 à 4, **caractérisé en ce que** la seconde partie d'installation (16) comprend une paire de trous dans lesquels sont engagées une paire de bossages de fixation (15)

6. Dispositif formant coussin de sécurité gonflable selon l'une des revendications 1 à 5, **caractérisé en ce que** les espaces (36) entre les deux côtés du couvercle de coussin de sécurité gonflable (5) et les deux côtés de la partie de corps de porte (9) sont formés en adaptant une dimension en largeur de la partie de corps de porte (9) de la porte de retenue (8) qui soit inférieure à une dimension en largeur du couvercle de coussin de sécurité gonflable (5) et les espaces (36) dans le sens de la largeur entre les deux côtés du couvercle de coussin de sécurité gonflable (5) et les deux côtés de la partie de corps de porte (9) sont réalisés pour qu'ils soient graduellement plus grands vers le côté avant, en coupant transversalement les portions d'angles de ladite partie de corps de porte (9).
